# EUROPÄISCHE PATENTSCHRIFT

(11) **EP 0 611 593 B1**
(45) Veröffentlichungstag und Bekanntmachung des Hinweises auf die Patenterteilung: **06.08.1997**
(21) Anmeldenummer: 94101545.5
(22) Anmeldetag: 02.02.1994
(51) Int. Cl.: B01J 2/16

(54) **Verfahren zur kontinuierlichen Wirbelschichtagglomeration**
Process for continuous agglomeration in fluidized bed
Procédé continu d'agglomération en lit fluidisé

(30) Priorität: 15.02.1993 DE 4304405
(43) Veröffentlichungstag der Anmeldung: 24.08.1994
(73) Patentinhaber: BAYER AG, 51368 Leverkusen (DE)
(72) Erfinder: Uhlemann, Hans, Dr., D-42657 Solingen (DE); Schmoll, Josef, Dr., D-38642 Goslar (DE); Bücheler, Manfred, Dipl.-Ing., D-51491 Overath (DE)

(56) Entgegenhaltungen:
- EP-A- 0 122 112
- EP-A- 0 163 836
- EP-A- 0 332 929
- CH-A- 584 567
- DD-A- 229 608
- DE-A- 3 323 418

## Beschreibung

Die Erfindung betrifft ein Verfahren zur kontinuierlichen Wirbelschichtagglomeration eines pulverförmigen Feststoffes, der zusammen mit einer Granulierflüssigkeit in ein mit Fluidisiergas betriebenes Wirbelbett eingesprüht wird und bei dem das fertige Granulat durch einen Windsichter aus dem Wirbelbett ausgetragen wird.

Zu diesem Zweck wird das zu agglomerierende Pulver im Apparat vorgelegt und mit Hilfe des Fluidisiergases in den Wirbelschichtzustand versetzt. Das fluidisierte Pulver wird mit der Granulierflüssigkeit besprüht und damit in einen klebrigen Zustand gebracht, sodaß die Granulatbildung einsetzt, Besitzen die Granulatkörner die gewünschte Größe, so erfolgt die Trocknung in der Regel bei abgeschalteter Flüssigkeitszufuhr in derselben Apparatur.

Das Fluidisierverhalten des Feststoffes ist aufgrund der sich ständig verändernden Partikelgröße vom Pulver bis zum Fertiggranulat einem ständigen Wandel unterworfen, wobei kleinere Partikel im Wirbelbett eine geringere Anströmgeschwindigkeit benötigen als große Partikel. Aus diesem Grund wird üblicherweise die Anströmgeschwindigkeit an die Partikelgröße angepaßt. Eine zu hohe Anströmgeschwindigkeit führt zu einem Austrag von Produkt aus dem Bett; eine zu niedrige Anströmgeschwindigkeit läßt das Bett "zusammenbrechen".

Neben Anlagen für eine diskontinuierliche Betriebsweise sind auch solche für den kontinuierlichen Einsatz bekannt. Im Regelfall weisen sie eine langgestreckte Bauart mit einzelnen Zonen auf, die von dem Produkt durchlaufen werden, bis es zum Austrag gelangt. Bei dieser Bauart liegen Pulvereintritt und Granulataustrag weit auseinander, wodurch die Rezirkulation von Granulatkörnern, die noch nicht die Wunschkorngröße erreicht haben, erschwert wird. Ein systematischer, homogener schalenartiger Granulat-Aufbau ist bei diesen Apparaten kaum möglich, da zunächst ein Überschuß an Pulver im Wirbelbett vorhanden ist. Verfahren und Apparaturen zur Wirbelschichtgranulation sind z.B. beschrieben in Chem. Ing. Tech. 45, S. 736-739 (1973)), DE 2 231 445, DE 2 555 917, EP 87 039 und EP 163 836.

Ein Granulatkorn mit reproduzierbar einstellbaren, gleichbleibenden physikalischen Eigenschaften (insbesondere Korngröße und mechanische Festigkeit) läßt sich nur dann erzeugen, wenn verfahrenstechnisch gleichbleibende Granulationsbedingungen in der Wirbelschichtapparatur eingehalten werden.

Gleichbleibende Granulationsbedingungen sind gegeben, wenn der Wirbelbettinhalt konstant gehalten wird, so daß im stationären Zustand die in das Wirbelbett eingespeiste Feststoffmasse gleich der Masse der dem Bett entnommenen fertigen Granulate ist.

Hier setzt die Erfindung an. Es lag die Aufgabe zugrunde, ausgehend von einem pulverförmigen Ausgangsprodukt mit Hilfe der Wirbelschichtgranulation möglichst sphärische Granulate mit einer engen Korngrößenverteilung kontinuierlich herzustellen. Dabei soll der Granulationsprozeß stets unter gleichbleibenden und reproduzierbar einstellbaren Granulationsbedingungen ablaufen, um eine gleichbleibende Produktqualität hinsichtlich der Größe und der mechanischen Eigenschaften des Granulats zu gewährleisten.

Diese Aufgabe wird, ausgehend von dem eingangs beschriebenen Verfahren, erfindungsgemäß dadurch gelöst, daß die Granulierflüssigkeit zusammen mit Treibluft zentral am Anströmboden des Wirbelbetts durch eine Dreistoffdüse zugeführt wird und gleichzeitig der pulverförmige Feststoff mittels eines getrennt und konzentrisch zugeführten Treibluftstroms durch den Ringspalt der Dreistoffdüse in das Wirbelbett eingespeist wird, so daß im Zentrum des Wirbelbetts ein Dreiphasengemisch aus Feststoff, Granulierflüssigkeit und Treibluft erzeugt wird.

Vorzugsweise wird das fertige Granulat aus dem Wirbelbett zentral durch ein konzentrisch zu der Dreistoffdüse am Windsichter angeordnetes Einlaufwehr ausgetragen.

Gemäß einer Weiterentwicklung der Erfindung wird der Feststoffinhalt des Wirbelbetts durch einen Regelkreis konstant gehalten, bei dem der Druckverlust der Fluidisierluft im Wirbelbett als Meßgröße und der Mengenstrom der Sichtluft im Windsichter als Stellgröße verwendet werden. Alternativ zur Verstellung des Sichtluftmengenstromes kann auch der Eintrittsquerschnitt des Einlaufwehrs am Windsichter nachgestellt werden.

Eine weitere Variante besteht darin, daß der Granulierflüssigkeit bereits ein Teil des zu granulierenden Feststoffes in fein verteilter Form zugesetzt wird. Als Granulierflüssigkeit wird also eine Suspension aus Feststoff und Flüssigkeit verwendet.

Die im Wirbelbett entstehenden Feinkornanteile werden zweckmäßig mit Hilfe eines externen Staubfilters abgetrennt und über den Feststoff-Treibluftstrom ins Wirbelbett rezirkuliert.

Eine weitere Verbesserung besteht darin, daß die Produktfeuchte im Wirbelbett gemessen wird und durch Nachstellung der ins Wirbelbett eindosierten Granulierflüssigkeit- oder Suspensionsmenge konstant geregelt wird.

Die Vorrichtung zur Durchführung des Verfahrens besteht aus einem Wirbelschichtgranulator mit einem Anströmboden und einer Düse zum Besprühen des fluidisierten Feststoffes mit der Granulierflüssigkeit sowie Zuführungen für den Feststoff und die Granulierflüssigkeit und einem Windsichter zum sichtenden Austrag des fertigen Granulats. Dabei ist erfindungsgemäß im Zentrum des Wirbelschichtgranulators axial eine Dreistoffdüse zum Versprühen eines Dreiphasengemisches aus Feststoff, Granulierflüssigkeit und Treibluft angeordnet. Zusätzlich ist in vorteilhafter Weise oberhalb der Sprühdüse ein höhenverstellbares Mischrohr angebracht.

Gemäß einer Weiterentwicklung ist vorgesehen, daß der Eintrittsquerschnitt des Einlaufwehrs am Windsichter durch eine aus einer drehbaren Sektorlamellenscheibe bestehende Jalousie einstellbar ist.

Die Erfindung ermöglicht, ausgehend von einem pulverförmigen Feststoff, die kontinuierliche Herstellung eines nahezu sphärischen Granulats mit enger Partikelgrößenverteilung unter gleichbleibenden und reproduzierbaren Betriebsbedingungen, bei denen im statistischen Mittel immer die gleiche Partikelgrößenverteilung im Fließbett vorherrscht. Ein weiterer Vorteil liegt in dem gleichmäßigen, schalenförmigen Granulataufbau, der im wesentlichen auf die in einem abgestimmten Mengenverhältnis zugegebene Granulierflüssigkeitsmenge und Pulvermasse zurückzuführen ist. Auf zusätzliche weitere Vorteile wird auch noch in der nachfolgenden detaillierten Beschreibung hingewiesen.

Im folgenden wird die Erfindung anhand von Ausführungsbeispielen und Zeichnungen näher beschrieben. Es zeigen:
- Fig. 1: ein Verfahrensschema zur grundsätzlichen Erläuterung der Pulverwirbelschichtgranulation
- Fig. 2: ein Verfahrenschema zur Darstellung der bei der Pulverwirbelschichtagglomeration angewandten Regelkonzepte und zur Erläuterung der Granulatbildung
- Fig. 3: einen Querschnitt durch das verstellbare Einlaufwehr am Windsichter
- Fig. 4: eine Draufsicht auf ein Einlaufwehr mit gemeinsam verstellbaren Einlaßöffnungen und
- Fig. 5: eine Draufsicht auf ein Einlaufwehr mit Einzelverstellung der Einlaßöffnungen

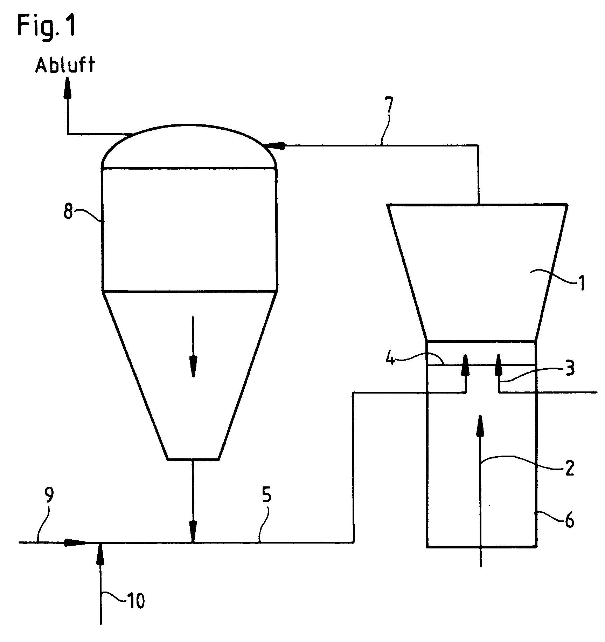

In Fig. 1 ist das Verfahrensprinzip der Wirbelschichtagglomeration dargestellt. Der Wirbelschichtapparatur (WSG-Apparatur) 1 wird von unten her kontinuierlich Fluidisierungsluft 2, Granulierflüssigkeit 3 und der zu agglomerierende pulverförmige Feststoff 4 durch eine pneumatische Förderleitung 5 zugeführt. Das mit Hilfe eines Windsichters (in Fig. 1 nicht gezeigt) klassierte fertige Granulat fällt in einen Produktbunker 6. Die eingespeisten Sicht-, Treib- und Fluidisierungsluftströme verlassen die WSG-Apparatur 1 über die Abluftleitung 7. Der mitgerissene Staub wird in einem externen Staubfilter 8 abgeschieden und durch die pneumatische Förderleitung 5 in die WSG-Apparatur 1 rezirkuliert. Die Treibluft für die pneumatische Förderleitung 5 wird über den Stutzen 9 und der zu agglomerierende Feststoff über den Anschluß 10 zugeführt.

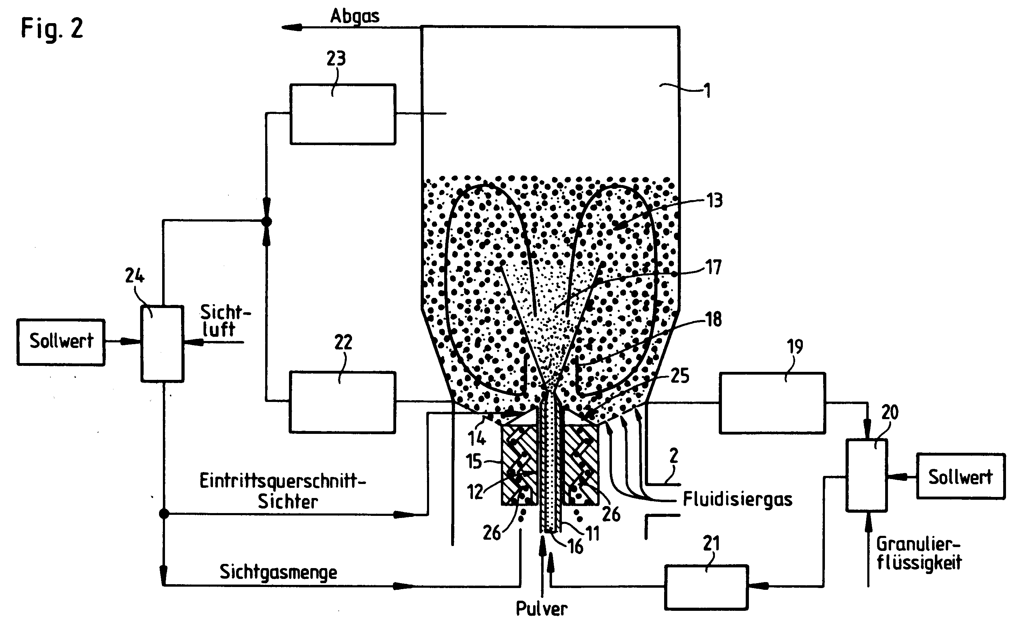

Der Feststoff wird über das Hüllrohr 11 einer zentral in der WSG-Apparatur 1 angeordneten Dreistoffdüse 12 in das Wirbelbett 13 eingespeist (siehe Fig. 2). Die Fluidisierluft 2 wird im Anströmboden 14 der WSG-Apparatur 1 zugeführt. Am Boden der Wirbelschichtapparatur 1 ist ebenfalls zentral und konzentrisch zu der Dreistoffdüse 12 ein Windsichter 15 am klassierenden Austrag des Granulats angeordnet.

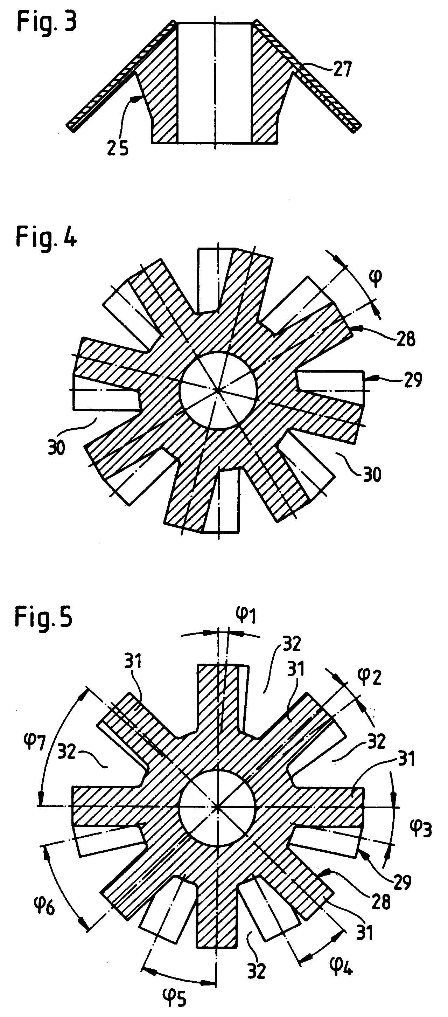

Von Luft getrieben wird der pulverförmige Feststoff durch die pneumatische Förderleitung in den Ringspalt der Dreistoffdüse geblasen. Die Granulierflüssigkeit 3 wird ebenfalls mittels Treibluft durch das Innenrohr 16 in die WSG-Apparatur eingedüst. Am Düsenkopf wird dadurch ein aus dem Dreiphasengemisch Pulver-Flüssigkeit-Luft bestehender Sprühkegel 17 erzeugt. Das im Fließbett 13 kontinuierlich anwachsende Granulat gelangt im Laufe der Zeit mehrfach über ein Einlaufwehr (siehe Fig. 3 bis Fig. 5) in den Windsichter 15, wo der Feinanteil abgetrennt und wieder in die WSG-Apparatur 1 zurückgeführt wird. Die Partikel, die schon die gewünschte Größe erreicht haben (Wunschkorngröße), fallen in den Produktbunker 6, während das noch unreife, zu feine Granulat vom Sichtluftstrom mitgerissen und in das Fließbett 13 zurückgetragen wird. Die zentrale Anordnung der Pulver- und Flüssigkeitszugabe einerseits und des Windsichters andererseits ermöglichen die Einstellung von Zonen verschiedener Feuchte im Fließbett 13. Im Zentrum des Fließbetts 13 findet die eigentliche Agglomeration statt, die durch die hohe Feuchte aufgrund der Flüssigkeitseinspeisung begünstigt wird. Zusätzlich bewirkt der Impuls der eingespeisten Treibluftströme, wie in Fig. 2 dargestellt, eine Zirkulationsbewegung des Fließbettes. Bevor die Granulate in den Windsichter 15 gelangen, müssen sie den Anströmboden 14 überqueren und kommen dort in intensiven Kontakt mit der heißen und trockenen Fluidisierungsluft. Dadurch ist gewährleistet, daß nur trockenes Granulat durch den Windsichter 15 hindurchfällt. Auf diese weise erhält man ohne zusätzliche Trocknung eine Produktrestfeuchte von weniger als 8 %.

Aufgrund der konzentrischen Anordnung des Windsichters 15 mit dem dazugehörigen weiter unten beschriebenen Einlaufwehr am Boden der WSG-Apparatur 1 werden rotationssymmetrische Partikelumläufe für die im Fließbett 13 befindlichen Granulatkörner erreicht. Damit ist die Wahrscheinlichkeit für eine Sichtung bzw. Klassierung für alle Partikel gleich groß. Ein zweiter wichtiger Aspekt ist die erwähnte schleifenartige Bewegung der Granulatkörner im Fließbett 13. Nach Befeuchtung durch die Granulierflüssigkeit 3 steigen die Granulatkörner zunächst nach oben, wandern dann in Richtung der Außenwand der WSG-Apparatur 1, sinken schließlich an der Wand wieder ab und gelangen dann über den Anströmboden 14 in den Einzugsbereich des Windsichters 15. Auf diese weise ergibt sich ein maximaler Umlaufweg zwischen Befeuchtung und Sichtung. Bevor das Granulat den Windsichter 15 erreicht, passiert es noch die Zone stärkster Trocknung oberhalb des Anströmbodens 14.

Oberhalb des Kopfes der Dreistoffdüse 12 ist zentral ein sich in axialer Richtung erstreckendes Mischrohr 18 angebracht, dessen Höhe über dem Anströmboden 14 einstellbar ist. Durch das Mischrohr 18 wird die Zone hoher Feuchte noch stärker auf den Mittenbereich des Fließbetts 13 konzentriert. Dadurch erhalten die benetzten Partikel eine noch höhere Haftkraft und sind somit besser in der Lage, das in diesem Bereich eingespeiste Pulver anzulagern. Diese Maßnahme führt zu einer Verminderung der integralen Feuchte im Wirbelbett 13.

Die beschriebene Anlage erlaubt die kontinuierliche Agglomeration von pulverförmigen Feststoffen unter gleichbleibenden Betriebsbedingungen. Wenn jedoch höhere Anforderungen an die physikalischen Produkteigenschaften gestellt werden, ist es erforderlich, zusätzlich regeltechnische Maßnahmen zu ergreifen, um eine langzeitstabile Betriebsweise zu gewährleisten. Es wurde gefunden, daß man diesen Forderungen Rechnung tragen kann, wenn die Partikelfeuchte und die Temperatur im Fließbett sowie der Wirbelbettinhalt (Betthöhe) in bestimmten Grenzen konstant gehalten werden. Nur bei einer ausreichenden Feuchte kommt es zur Agglomeration. Die Temperierung des Wirbelbettes ist erforderlich, damit die Granulierflüssigkeit nach Erfüllung ihrer Aufgabe als Bindemittel durch Trocknung entfernt werden kann. Ein steigender Bettinhalt führt nicht nur zu einem höhere Druckverlust im Wirbelbett und daher zu einer Erhöhung der erforderlichen Vordrücke der Fluidisierungsluft und der Sichtluft, sondern auch zu einem veränderten Verweilzeitverhalten für die Partikel. Durch den längeren Zirkulationsweg werden die Granulate nicht mehr so häufig dem Sichtvorgang unterzogen, wodurch die Trennung von Produkt-Wunschkorn und -Unterkorn verschlechtert wird. Aus diesen Gründen wurde eine vollautomatische Regelung entwickelt, um die Parameterfeuchte, Bettinhalt und Bett-Temperatur konstant zu halten. Die dazu erforderlichen Regelkreise werden anhand von Figur 2 erläuterte Die Feuchte im Wirbelbett wird mit einem Infrarot-Feuchtesensor 19 gemessen. Der gemessene Feuchtewert wird durch einen separaten Regler 20 mit einem vorgegebenen Sollwert verglichen und die Dosierpumpe 21 für die Granulierflüssigkeit so nachgestellt, daß die Differenz zwischen dem Feuchtemeßwert und dem vorgegebenen Sollwert minimiert wird. Auf diese Weise kann die Feuchte im Wirbelbett in einem engen Bereich konstant gehalten werden. Eine zu trockene Betriebsweise würde die Agglomeration der Partikel behindern, da in diesem Fall die aus den Flüssigkeitsbrücken resultierenden wechselseitigen Haftkräfte nicht ausreichen würden. Auf der anderen Seite würde eine Steigerung der Feuchte im Bett die interpartikulären Haftkräfte vergrößern und damit die Bewegung der Einzelpartikel behindern. Bei einer zu großen Feuchte bricht schließlich das Wirbelbett wegen Überfeuchtung zusammen (Bildung einer pastösen Masse).

Wird die Granulierflüssigkeit als reine Flüssigkeit in das Wirbelbett eindosiert, so ist zunächst eine Benetzung der Partikel erforderlich bis die erwähnten Haftkräfte durch Brückenbildung wirksam werden. Verwendet man jedoch als Granulierflüssigkeit von vornherein bereits eine Suspension aus dem zu granulierenden Feststoff und der Flüssigkeit, so liegen schon teilweise benetzte Partikel mit einer verbesserten Agglomerationsfähigkeit vor. Diese Partikel treffen dann auf größere Granulatkörner, an denen sie spontan anhaften. Gleichzeitig sind sie wegen der klebrigen Oberfläche in der Lage, weitere Pulverteilchen anzulagern. Es hat sich herausgestellt, daß der Agglomerationsvorgang insgesamt durch Verwendung einer Feststoffsuspension anstelle einer feststoffreien Granulierflüssigkeit begünstigt wird, so daß die integrale Feuchte im Wirbelbett reduziert werden kann. Damit werden die Trocknung erleichtert und die Energiekosten eingespart. Zur Herstellung der Feststoffsuspension wird ein Teil des pulverförmigen Feststoffs 4 abgezweigt und der Granulierflüssigkeit 3 beigemischt.

Ändert sich die Höhe der Produktschüttung im Wirbelbett 13 (Wirbelbetthöhe), so ist damit auch eine Veränderung der Partikelbewegung verbunden. Im Sinne einer konstanten Produktqualität ist jedoch eine möglichst konstante Betriebweise aller die Partikelqualität beeinflussenden Parameter anzustreben. Aus diesem Grund ist ein weiterer Regelkreis vorgesehen, der für die Einhaltung eines konstanten Wirbelbettinhalts bzw. einer konstanten Wirbelbetthöhe sorgt. Als Meßgröße zur Erfassung des Masseninhalts einer Wirbelschicht wird hier der Druckverlust des Gases in der Schüttung benutzt, der weitgehend proportional zur Wirbelbettmasse ist. Zu diesem Zweck wird der Differenzdruck mit Hilfe von zwei Druckmeßfühlern 22 und 23 zwischen einer Stelle am Boden des Wirbelbettes 13 und oberhalb des Wirbelbettes gemessen. Das Differenzdrucksignal wird einem Regler 24 zugeführt, der den für den Windsichter 15 benötigten Sichtgasmengenstrom so nachstellt, daß der Differenzdruck konstant bleibt und einem voreingestellten Sollwert entspricht. Als Stellgröße wird also der Sichtgasmengenstrom benutzt. Eine Steigerung des Sichtgasmengenstroms führt zu einer Vergrößerung der ausgetragenen Granulate. Da der Aufbau der größeren Granulate aber eine längere Verweilzeit im Wirbelbett erfordert, führt dies auch zu einem Anstieg der Wirbelbetthöhe. Umgekehrt wird durch eine Reduzierung des Sichtluftstromes der Granulatabfluß durch den Windsichter 15 erhöht. Zur Verstellung des Sichtgasmengenstroms muß der Regler 24 ein einstellbares Ventil enthalten.

Alternativ kann anstelle des Sichtgasmengenstroms auch der Eintrittsquerschnitt des Einlaufwehrs am Windsichter 15 als Stellgröße für die Regelung herangezogen werden.

Durch das rotationssymmetrisch und zentral am Boden der WSG- Apparatur 1 angeordnete Einlaufwehr 25 gelangen die Granulatkörner in die zickzackförmigen Windsichterkanäle 26. Ein Einlaufwehr mit einstellbarem, variablen Einlaßquerschnitt ist in den Fig. 3 bis 5 dargestellt. Das Einlaufwehr 25 weist eine kegelstumpfförmige Jalousie 27 auf, die bündig an die Dreistoffdüse 12 anschließt (siehe Fig. 2 und Fig. 3). Gemäß Fig. 4 besteht die Jalousie aus zwei übereinander angeordneten, gegeneinander verdrehbaren Sektorlamellenscheiben 28 und 29. Durch Verdrehung einer Sektorscheibe kann der Eintrittsquerschnitt der über den darunter befindlichen Sichterkanälen 26 liegenden Einlaßöffnungen 30 (entsprechend dem Drehwinkel ø) verändert werden. Bei der Regelung gemäß Fig. 2 erfolgt die Verdrehung der Sektorlamellenscheibe mit einem Stellmotor.

Im Gegensatz zu der Ausführung nach Fig. 4 können bei dem Einlaufwehr nach Fig. 5 wahlweise die einzelnen Lamellen 31 der oberen Sektorscheibe 28 gegenüber der unteren Sektorscheibe 29 verdreht werden, so daß der Eintrittsquerschnitt der Einlaßöffnungen 32 (entsprechend den Drehwinkeln ϕ1, ϕ2, ϕ3, ...) individuell eingestellt werden kann. Diese Einzelverstellung kommt zum Tragen, wenn der Windsichter 15 in mehrere segmentförmige Kammern unterteilt wird, die den Einlaßöffnungen 32 zugeordnet sind. Auf diese Weise können einzelne Kammern verschlossen werden, während die verbleibenden Kammern optimal mit dem zu sichtenden Produkt beaufschlagt werden. Bei dieser Betriebsweise sind also die Kammern entweder geschlossen oder werden unter optimalen Bedingungen betrieben.

Die Auswahl einer geeigneten Granulierflüssigkeit erfolgt in Abhängigkeit von dem zu granulierenden Feststoff nach dem Stand der Technik unter dem Gesichtspunkt der Funktion eines Bindemittels zwischen den zu agglomerierenden Partikeln. Die Aufgabe der Granulierflüssigkeit besteht zunächst in der Herstellung von Flüssigkeitsbrücken zwischen einzelnen Feststoffpartikeln. Aufgrund von kapilarem Unterdruck und Oberflächenspannung der Flüssigkeit werden die Partikel im feuchten Zustand zusammengehalten.

Bei der dem Granulationsprozeß folgenden Trocknung verliert sich dieser Effekt dann wieder. Dabei sind folgende Fälle zu unterscheiden:
a. Ist der Feststoff in der Granulierflüssigkeit löslich, so kristallisieren die gelösten Anteile bei der Trocknung aus und ersetzen die Flüssigkeitsbrücke durch eine in der Regel härtere Feststoffbrücke.
b. Ist der Feststoff dagegen in der Granulierflüssigkeit unlöslich, so muß der Granulierflüssigkeit eine lösliche Komponente zugesetzt werden, welche dann bei der Trocknung zu einer (stofffremden) Feststoffbrücke führt.

Bei unzureichenden Benetzungseigenschaften des Feststoffes und der Granulierflüssigkeit kann der Fall eintreten, daß die noch feuchten Granulate eine zu geringe mechanische Festigkeit aufweisen. Dadurch wird der Agglomerationsvorgang beeinträchtigt, sodaß es häufig zur Ausbildung von unzureichend kleinen Granulatkörnern kommt. Abhilfe schaffen in solchen Fällen hochmolekulare Bindemittel, welche die Klebrigkeit der Granulierflüssigkeit steigern.

Der pulverförmige Feststoff kann neben dem zu granulierenden Produkt auch noch weitere Komponenten, z.B. zusätzliche Bindemittel, wie z.B. Stärke oder andere wasserlösliche Polymere enthalten.

## Patentansprüche

1. Verfahren zur kontinuierlichen Wirbelschichtagglomeration eines pulverförmigen Feststoffes (4) der zusammen mit einer Granulierflüssigkeit (3) in ein mit Fluidisierluft (2) betriebenes Wirbelbett (13) eingesprüht wird und bei dem das fertige Granulat durch einen Windsichter (15) aus dem Wirbelbett (13) ausgetragen wird, dadurch gekennzeichnet, daß die Granulierflüssigkeit (3) zusammen mit Treibluft zentral am Anströmboden (14) des Wirbelbetts (13) durch eine Dreistoffdüse (12) zugeführt wird und gleichzeitig der Feststoff (4) mittels eines getrennt und konzentrisch zugeführten Treibluftstroms durch den Ringspalt der Dreistoffdüse (12) in das Wirbelbett (13) eingespeist wird, so daß im Zentrum des Wirbelbetts (13) ein Dreiphasen-Gemisch aus Feststoff (4), Granulierflüssigkeit (3) und Treibluft erzeugt wird.

2. Verfahren nach Anspruch 1, dadurch gekennzeichnet, daß das fertige Granulat aus dem Wirbelbett (13) durch ein konzentrisch zu der Dreistoffdüse (12) am Windsichter (15) angeordnetes Einlaufwehr (25) ausgetragen wird.

3. Verfahren nach Anspruch 1 bis 2, dadurch gekennzeichnet, daß der Feststoffinhalt des Wirbelbetts (13) durch einen Regelkreis konstant gehalten wird, bei dem
a) der Druckverlust der Fluidisierluft im Wirbelbett (13) als Meßgröße und
b) der Mengenstrom der Sichtluft im Windsichter (15) als Stellgröße verwendet werden.

4. Verfahren nach Anspruch 1 bis 2, dadurch gekennzeichnet, daß der Feststoffinhalt des Wirbelbetts durch einen Regelkreis konstant gehalten wird, bei dem
a) der Druckverlust der Fluidisierluft im Wirbelbett als Meßgröße und
b) der Eintrittsquerschnitt des Einlaufwehrs (25) am Windsichter (15) als Stellgröße verwendet werden.

5. Verfahren nach Anspruch 1 bis 4, dadurch gekennzeichnet, daß der Granulierflüssigkeit (3) ein Teil des zu granulierenden Feststoffes (4) in fein verteilter Form zugesetzt wird.

6. Verfahren nach Anspruch 1 bis 5, dadurch gekennzeichnet, daß Feinkornanteile im Wirbelbett (13) durch ein externes Staubfilter (8) abgetrennt und über den Feststoff-Treibluftstrom (5) ins Wirbelbett (13) rezirkuliert werden.

7. Verfahren nach Anspruch 1 bis 6, dadurch gekennzeichnet, daß die Produktfeuchte im Wirbelbett (13) gemessen wird und durch Nachstellung der ins Wirbelbett eindosierten Granulierflüssigkeits- oder Suspensionsmenge konstant geregelt wird.

8. Vorrichtung zur Durchführung des Verfahrens, bestehend aus einem Wirbelschichtgranulator (1) mit einem Anströmboden (14) und einer Düse zum Besprühen des fluidisierten Feststoffes (4) mit Granulierflüssigkeit (3) und Zuführungen für den Feststoff (4) und die Granulierflüssigkeit (3), sowie einem Windsichter (15) zum sichtenden Austrag des fertigen Granulats, dadurch gekennzeichnet, daß im Zentrum des Wirbelschichtgranulators (1) axial eine Dreistoffdüse (12) zum Versprühen eines Dreiphasen-Gemisches aus Feststoff, Granulierflüssigkeit und Treibluft angeordnet ist.

9. Vorrichtung nach Anspruch 8, dadurch gekennzeichnet, daß axial oberhalb der Dreistoffdüse (12) ein höhenverstellbares Mischrohr 18 angebracht ist.

10. Vorrichtung nach Anspruch 8 bis 9, dadurch gekennzeichnet, daß der Eintrittsguerschnitt des Einlaufwehrs (25) zum Windsichter (15) durch eine aus einer drehbaren Sektor-Lamellen-Scheibe (28) bestehende Jalousie (27) einstellbar ist.

## Claims

1. Process for the continuous fluidized-bed agglomeration of a pulverulent solid (4) which is sprayed, together with a granulating liquid (3) into a fluidized bed (13) operated by fluidizing air (2) and in which the finished granules are discharged from the fluidized bed (13) through an air classifier (15), characterized in that the granulating liquid (3) is fed together with motive air centrally at the gas distributor plate (14) of the fluidized bed (13) through a three-component nozzle (12) and at the same time the solid (4) is fed into the fluidized bed (13) by means of a motive air stream fed separately and concentrically through the annular gap of the three-component nozzle (12), so that a three-phase mixture of solid (4), granulating liquid (3) and motive air is produced in the centre of the fluidized bed (13).

2. Process according to Claim 1, characterized in that the finished granules are discharged from the fluidized bed (13) through an intake weir (25) arranged concentrically to the three-component nozzle (12) on the air classifier (15).

3. Process according to Claim 1 to 2, characterized in that the solids content of the fluidized bed (13) is kept constant by a control loop in which
a) the pressure drop of the fluidizing air in the fluidized bed (13) is used as a measured variable and
b) the flow rate of the classifying air in the air classifier (15) is used as a manipulated variable.

4. Process according to Claim 1 to 2, characterized in that the solids content of the fluidized bed is kept constant by a control loop in which
a) the pressure drop of the fluidizing air in the fluidized bed is used as a measured variable and
b) the inlet cross-sectional area of the intake weir (25) on the air classifier (15) is used as a manipulated variable.

5. Process according to Claim 1 to 4, characterized in that some of the solid (4) to be granulated is added in finely divided form to the granulating liquid (3).

6. Process according to Claim 1 to 5, characterized in that fine-grain portions in the fluidized bed (13) are separated off by an external dust filter (8) and recirculated into the fluidized bed (13) via the solids/motive air stream (5).

7. Process according to Claim 1 to 6, characterized in that the product moisture in the fluidized bed (13) is measured and is controlled so as to be constant by adjusting the amount of granulating liquid or suspension metered into the fluidized bed.

8. Apparatus for carrying out the process, consisting of a fluidized-bed granulator (1) having a gas distributor plate (14) and a nozzle for spraying the fluidized solid (4) with granulating liquid (3) and feeds for the solid (4) and the granulating liquid (3), and also of an air classifier (15) for the classifying discharge of the finished granules, characterized in that a three-component nozzle (12) is arranged axially in the centre of the fluidized-bed granulator (1) for spraying a three-phase mixture of solid, granulating liquid and motive air.

9. Apparatus according to Claim 8, characterized in that an adjustable-height mixing tube 18 is mounted axially above the three-component nozzle (12).

10. Apparatus according to Claim 8 to 9, characterized in that the inlet cross-sectional area of the intake weir (25) to the air classifier (15) by means of a louvre (27) consisting of a rotatable sector lamella disc (28).

## Revendications

1. Procédé d'agglomération continue en lit fluidisé d'une matière solide (4) en poudre qui est pulvérisée conjointement avec un liquide de granulation (3) dans un lit tourbillonnaire (13) actionné par de l'air fluidisant (2) et dans lequel le produit final granulé est déchargé du lit tourbillonnaire (13) par un aéroclasseur (15), caractérisé en ce que le liquide de granulation (3) est amené conjointement avec de l'air propulseur au centre du fond d'admission (14) du lit tourbillonnaire (13) par une buse ternaire (13) et, en même temps, la matière solide (4) est injectée dans le lit tourbillonnaire (13), au moyen d'un courant d'air propulseur amené séparément et concentriquement, par la fente annulaire de la buse ternaire (12), ce qui a pour effet de produire au centre du lit tourbillonnaire (13) un mélange à trois phases de matière solide (4), de liquide de granulation (3) et d'air propulseur.

2. Procédé suivant la revendication 1, caractérisé en ce que le produit granulé final est déchargé du lit tourbillonnaire (13) par un déversoir d'entrée (25) disposé sur l'aéroclasseur (15) concentriquement par rapport à la buse ternaire (12).

3. Procédé suivant les revendications 1 et 2, caractérisé en ce que la quantité de matière solide présente dans le lit tourbillonnaire (13) est maintenue constante par un circuit de régulation dans lequel
a) la chute de pression de l'air fluidisant dans le lit tourbillonnaire (13) est utilisée comme grandeur de mesure et
b) le débit de l'air agissant dans l'aéroclasseur (15) est utilisé comme grandeur réglante.

4. Procédé suivant les revendications 1 et 2, caractérisé en ce que la quantité de matière solide présente dans le lit tourbillonnaire est maintenue constante par un circuit de réglage dans lequel
a) la chute de pression de l'air fluidisant dans le lit tourbillonnaire est utilisée comme grandeur de mesure et
b) la section transversale d'admission du déversoir (25) d'accès à l'aéroclasseur (15) est utilisée comme grandeur réglante.

5. Procédé suivant les revendications 1 à 4, caractérisé en ce qu'une partie de la matière solide (4) à granuler est ajoutée sous une forme finement divisée au liquide de granulation (3).

6. Procédé suivant les revendications 1 à 5, caractérisé en ce que la fraction en fines particules dans le lit tourbillonnaire (13) est séparée par un filtre à poussière (8) disposé extérieurement et est recyclée au lit tourbillonnaire (13) par le courant (5) de matière solide et d'air propulseur.

7. Procédé suivant les revendications 1 à 6, caractérisé en ce que l'humidité du produit est mesurée dans le lit tourbillonnaire (13) et est réglée à une valeur constante par compensation de la quantité de liquide de granulation ou de suspension injectée dans le lit tourbillonnaire.

8. Dispositif pour la mise en oeuvre du procédé, constitué d'un granulateur (1) à lit tourbillonnaire comprenant un fond d'admission (14) et une buse de pulvérisation de la matière solide (4) fluidisée avec un liquide de granulation (3) et des arrivées de matière solide (4) et du liquide de granulation (3), ainsi que d'un aéroclasseur (15) permettant la décharge par classement du produit final granulé, caractérisé en ce qu'une buse ternaire (12) est disposée axialement au centre du granulateur (1) à lit tourbillonnaire pour la pulvérisation d'un mélange à trois phases de matière solide, de liquide de granulation et d'air propulseur.

9. Dispositif suivant la revendication 8, caractérisé en ce qu'un tube mélangeur (18) réglable en hauteur est adapté axialement au-dessus de la buse ternaire (12).

10. Dispositif suivant les revendications 8 et 9, caractérisé en ce que la section transversale d'admission du déversoir (25) d'accès à l'aéroclasseur (15) est réglable par une jalousie (27) constituée d'un disque rotatif (28) à secteurs en lamelles.
